# EUROPEAN PATENT SPECIFICATION

(11) **EP 1 927 621 B1**
(45) Date of publication and mention of the grant of the patent: **24.03.2010**
(21) Application number: 06256166.7
(22) Date of filing: 01.12.2006
(51) Int. Cl.: C08K 3/08, B29C 33/38, B29C 70/02

(54) **Metal filled polyurethane composition and moulds prepared therefrom**
Metallgefüllte Polyurethanzusammensetzung und daraus hergestellte Formwerkzeuge
Composition de polyurethane chargé de métal et moules produits de celle-ci

(43) Date of publication of application: 04.06.2008
(73) Proprietor: DOW GLOBAL TECHNOLOGIES INC., Midland MI 48674 (US)
(72) Inventor: Corinti, Elisa, 42015 Correggio (RE) (IT)
(74) Representative: Hull, John Philip

(56) References cited:
- EP-A2- 0 412 891
- EP-A2- 1 101 783
- WO-A-93/12170
- GB-A- 2 268 496
- US-A- 5 451 629
- DATABASE WPI Week 200478 Derwent Publications Ltd., London, GB; AN 2004-788645 XP002433298 & JP 2004 300300 A (BANDO CHEM IND LTD) 28 October 2004 (2004-10-28)

## Description

The present invention relates to a polyurethane composition, a method of making the polyurethane composition and the use of the polyurethane composition for making moulds, particularly moulds for shoe soles.

Moulds for shoe soles are typically made of aluminium. The problem with these moulds are that they are expensive, because aluminium is an expensive raw material, and the cost associated with a slow production time as a result of the difficulty of working with aluminium blocks.

It is known to use other materials when producing moulds for shoe soles, such as polyurethane, as disclosed in EP1323755. However, moulds made from these materials also suffer from considerable disadvantages. Although initial shoe sole production is good, there is a rapid increase in mould temperature from 25 to 60°C, with soles moulded at a temperature of greater than 45°C showing problems caused by a change in the chemical reactivity of the surface of the polyurethane mould at temperatures greater than 45°C. This problem could be resolved by cooling the moulds or allowing them to be cooled to less than 40°C. However, this has the disadvantage of slowing down the process.

Accordingly, it is the aim of the present invention to provide a new material which can be used for making moulds, particularly for shoe soles, the material being cheaper than the aluminium moulds currently used. In addition, it is the aim of the present invention that the material can be processed using the same tools as for aluminium moulds, but more easily and more quickly, but at the same time can produce soles of equivalent quality and at an equivalent rate to aluminium moulds.

In a first aspect of the present invention, there is provided a composition comprising a polyurethane and from 20 to 80 weight percent of a particulate metal or metal alloy filler, wherein polyurethane is the reaction product of:
a) a first polyol, the first polyol having a molecular weight of less than 1000;
b) a second polyol, the second polyol having a molecular weight of from 1500 to 10000; and
c) at least one polyisocyanate, and
wherein the particulate metal or metal alloy filler has a thermal conductivity of at least 150 watts/m.°K. The metal or metal alloy can be non-ferromagnetic or ferromagnetic. In one preferred embodiment, the metal or metal alloy is non-ferromagnetic, and more preferably at least one of aluminium, copper, zinc, gold, bronze and silver. Preferably, the particulate is in the form of one or more of granules, platelets, pellets, beads, flakes, particles, lamellae or grains. Preferably, at least one of the first and second polyols is a polyether polyol, and more preferably, both first and second polyols are polyether polyols.

The composition preferably additionally comprises at least one of a water absorbent, such as a zeolite; an antifoaming agent; and a viscosity cutter. Some antifoaming agents can act as a viscosity cutter, and so an additional viscosity cutter may not be required.

A particularly preferred composition comprises a polyurethane, a zeolite paste and a particulate metal or metal alloy filler, wherein the polyurethane is the reaction product of:
a) from 40 to 60 parts by weight of a first polyether polyol, the first polyether polyol having a molecular weight of from 100 to 600 and a functionality of from 2 to 8;
b) from 40 to 60 parts by weight of a second polyether polyol, the second polyether polyol having a molecular weight of from 1500 to 8000 and a functionality of from 2 to 6; and
c) at least one isocyanate, wherein the isocyanate is present in an amount to provide for an isocyanate index of from 80 to 115, and
wherein the composition comprises
from 5 to 15 parts by weight of the zeolite paste and from 50 to 200 parts by weight of a particulate aluminium filler.

The composition of the first aspect of the invention may be used to produce any solid article. However, it is particularly suitable for producing a mould, such as a mould for forming part of a footwear article, such as a shoe or a boot, and in particular for forming a sole of the footwear article. The composition can also be used in the production of moulds for other purposes, such as for producing furniture parts and mechanical parts.

The mould is suitable for use where the article to be produced is a plastics material, such as polyurethane, and in particular for the production of an article in which the plastics material can be poured or injected into the mould. Typical conditions for pouring the plastics material are a temperature range of from 25 to 130°C and a pressure of 0 to 5 bar. However, the moulds are also suitable for use at temperatures higher than 130°C.

Polyurethane foams are commonly used to manufacture a large number of different articles. One particular example is the field of sporting goods, and more particularly, shooting and archery targets, which may be in the form of animals and birds. The moulds used in the production of these targets are usually very crude, and as they are typically sold very cheaply, it is not economical to use custom-made metal moulds to produce higher quality, less crude targets. The compositions of the present invention are particularly suitable for use in the production of moulds, for example by using computer-aided design, which can produce targets having greater detail. The moulds produced are both cheap and of high quality, which will reduce the number of rejects produced.

The composition is particularly suited for the production of moulds for prototype articles. The nature of the composition is such that it can be produced easily and cheaply, and can readily be formed into the shape of a mould.

In a second aspect of the present invention, there is provided a mould for producing a plastics material part comprising a polyurethane and a particulate metal or metal alloy filler, wherein the polyurethane is the reaction product of:
a) a first polyol, the first polyol having a molecular weight of less than 1000;
b) a second polyol, the second polyol having a molecular weight of from 1500 to 10000; and
c) at least one polyisocyanate. Preferably, at least one of the first and second polyols is a polyether polyol, and more preferably, both first and second polyols are polyether polyols.

In a third aspect of the present invention, there is provided a mould for a part of a footwear article, for example a sole, formed from a composition comprising a polyurethane and at least one particular metal or metal alloy filler, wherein the polyurethane is the reaction product of at least one polyol and at least one isocyanate. Preferably, the polyol is a polyether polyol.

Without wishing to be bound by theory, it is thought that one of the major problems with polyurethane-only moulds is poor heat dissipation. By inclusion of one or more specific particulate metals or metal alloys as a filler in the polyurethane formation, it is possible to provide to improve the heat dissipation of the material.

A large number of alternative materials could be used which have improved heat dissipation; including metal carbonates, oxides, sulphates and sulphides. However, it is not sufficient simply to improve heat dissipation; it is also necessary to ensure that the composition has the correct properties for machining into the shape of the mould, including turning, milling, shaving, holing and threading. It is important that the material does not produce excessive dust when being machined. In addition, it is important that the material is sufficiently structurally sound to ensure that a mould can be made. It is also important that the material does not have excessive thermal expansion, which would affect the shape of the mould as it gets hotter during use. Further important features are that the composition is not too dense, and has sufficient hardness.

In a fourth aspect of the present invention, there is provided a method of producing a mould, comprising the steps of:
i) mixing a first polyol having a molecular weight of less than 1000 and a second polyol having a molecular weight of from 1500 to 10000;
ii) adding a particulate metal filler to the mixture of step i) wherein the metal has a thermal conductivity of at least 150 watts/m.°K;
iii) mixing the polyol and filler mixture under vacuum; and
iv) adding at least one isocyanate and mixing. Optionally, step iv) can be undertaken under vacuum. However, it is typically undertaken at ambient pressure. Preferably, at least one of the first and second polyols is a polyether polyol, and more preferably, both first and second polyols are polyether polyols.

In a preferred embodiment, a water absorbent, such as a zeolite, is additionally added in step i).

It is preferable that the surface of the mould is sufficiently smooth so that there are no defects on the surface of the resultant sole. When the filler and the polyol are mixed, bubbles form in the mixture which results in flaws in the mould material which are then present on the surface of the mould after machining. Mixing the components under vacuum, and in particular the mixing of the polyol side of the reactants, including addition of the filler, prevents or reduces air bubble formation. Addition of an anti-foaming agent is also useful for preventing or reducing bubble formation. Where the polyol and filler are mixed under vacuum, the resultant composition has a very smooth, shiny finish. However, when the composition is formed without the use of vacuum, the surface finish tends to be matt, and have imperfections due to air bubbles on the surface of the composition.

The mould can be formed by any known methods. Suitable methods include pouring the reaction mixture onto a model to form the mould or milling a block to the appropriate mould shape.

The composition of the present invention is particular useful for the production of moulds for prototype parts, where a relatively small quantity of parts (for example up to 1000)
are required. A mould according to the present invention can be produced more quickly and more cost effectively than the corresponding aluminium mould. This enables the producer to produce a set of identical parts for rapid evaluation, without the high cost of producing an aluminium mould, as was previously necessary. However, the composition is also suitable for use in the production of moulds for other plastics material parts as well as prototypes.

Accordingly, in a fifth aspect of the present invention, there is provided a method of producing a plastics material part, comprising producing the mould as described above or undertaking the method as described above, and using the mould to produce the part. Preferably, the part is a prototype part.

It is preferred that the composition of the present invention is non-cellular, that is the composition is not a foam. In one preferred embodiment, the composition has a density of at least 1.2 g/cm³. More preferably, the composition has a density of at least 1.3 and yet more preferably 1.45 g/cm³. Preferably, the composition has a density of less than 2.2 g/cm³, more preferably less than 1.8 g/cm³.

It is preferred that the only polymer present is a polyurethane in the composition. It is particularly preferred that the composition does not contain any polyepoxide.

A number of different metal or metal alloy particulates are suitable for use as the filler in the present invention. The metal or metal alloy particulate to be used can either be one metal or metal alloy or a mixture of metals and/or metal alloys. The metal or metal alloy to be used is typically one having a high thermal conductivity. Suitable metals are ones having a thermal conductivity of at least 150 watts/m.°K. It is preferred that the metal has a thermal conductivity of at least 180, more preferably at least 200 watts/m.°K. The metal or metal alloy is suitably one which is not ferro-magnetic. However, in some cases, ferromagnetic metals can be used on their own or in combination with non-ferromagnetic metals. Suitable metals or metal alloys include aluminium (235 watts/m.°K), copper (400 watts/m.°K), zinc (194 watts/m.°K), bronze, gold (317 watts/m.°K) and silver (429 watts/m.°K). It is preferred that the metal is aluminium or copper or a combination thereof, and more preferably the metal is aluminium.

The metal filler is in the form of a particulate such that it can be spread throughout the resultant polyurethane composition during mixing of the polyol side, prior to addition of the isocyanate. Exemplary types of particulate include granules, platelets, pellets, beads, flakes, particles or grains. However, the present invention can suitably be used with any type of particulate. It is particularly suitable that the metal or metal alloy filler is in the form of spherical or substantially spherical particulate. Fillers of this type offer the best all round characteristics. Where fillers which are platelets are used, the thermal conductivity of the resultant polymer is substantially improved. However, the reaction mixture is very viscous and hard to mix, and therefore platelets are less favourable than spherical particulate. Preferably the particulate has a mean diameter of from 20 to 100 micrometers, regardless of shape. It is particularly preferred that the filler consists of metal or metal alloy particles having a mean diameter of from 20 to 40 micrometers. Particularly preferred are aluminium particles having a mean diameter of from 30 to 40 micrometers.

The metal or metal alloy filler is preferably used in an amount of from 20 to 80 weight percent, based on the total weight of the composition. It is further preferred that the metal filler is used in an amount of from 30 to 70 weight percent, and yet more preferably from 35 to 55 weight percent.

The compositions of the present invention are formed using a polyurethane, which is the reaction product of at least one polyol and at least one isocyanate. Although it is preferred that the polyol is a polyether polyol, a polyester polyol can be used.

Suitably, the composition is formed using a first polyol having a molecular weight of less than 1000 (a low molecular weight polyol) and a second polyol having a molecular weight of from 1500 to 10000 (a high molecular weight polyol). The combination of two different polyols provides a polyurethane having excellent physical properties for use as a mould. The low molecular weight polyol provides the hardness for the resultant composition, whilst the high molecular weight composition provides elasticity to prevent the composition being too brittle.

It is preferred that at least one of the first and second polyols are polyether polyols, and more preferably, both first and second polyols are polyether polyols.

The low molecular weight polyether polyol preferably has a molecular weight of from 100 to 600g/mol, more preferably from 125 to 500 and most preferably from 150 to 450g/mol.

The low molecular weight polyether polyols include those obtained by the alkoxylation of suitable starting molecules with an alkylene oxide, such as ethylene, propylene, butylene oxide, or a mixture thereof. Examples of initiator molecules include water, ammonia, aniline or polyhydric alcohols such as dihydric alcohols, especially the alkane polyols such as ethylene glycol, propylene glycol, hexamethylene diol, glycerol, trimethylol propane or trimethylol ethane, or the low molecular weight alcohols containing ether groups such as diethylene glycol, triethylene glycol, dipropylene glycol or tripropylene glycol. Other commonly used initiators include pentaerythritol, xylitol, arabitol, sorbitol, mannitol and the like. Particularly preferred is glycerin.

Preferably a poly(propylene oxide) polyol, including poly(oxypropylene-oxyethylene) polyols, is used. Preferably the oxyethylene content should comprise less than about 40 weight percent of the total and preferably less than about 25 weight percent of the total weight of the polyol. The ethylene oxide can be incorporated in any manner along the polymer chain, which stated another way means that the ethylene oxide can be incorporated either in internal blocks, as terminal blocks, may be randomly distributed along the polymer chain, or may be randomly distributed in a terminal oxyethylene-oxypropylene block. These polyols are conventional materials prepared by conventional methods.

Other polyether polyols include the poly(tetramethylene oxide) polyols, also known as poly(oxytetramethylene) glycol, that are commercially available as diols. These polyols are prepared from the cationic ring-opening of tetrahydrofuran and termination with water as described in Dreyfuss, P. and M. P. Dreyfuss, Adv. Chem. Series, 91, 335 (1969).

The low molecular weight polyol preferably has a functionality, i.e the number of isocyanate reactive hydrogens per polyol, of at least 1.5, more preferably from 2 to 8, yet more preferably from 2 to 6 and most preferably from 2 to 4.

The polyol preferably has a hydroxyl number of from 100 to 700 and preferably from 400 to 600.

A particularly preferred low molecular weight polyether polyol is Voranol® CP 260, which is available from The Dow Chemical Company. This polyol has a functionality of 3 and a molecular weight of 260g/mol.

The amount of low molecular weight polyol used is preferably from 5 to 95 weight percent, based on the total amount of polyol used. More preferably, from 10 to 90, yet more preferably from 15 to 85 and most preferably from 40 to 60 weight percent of low molecular weight polyol is used.

The high molecular weight polyether polyols include those obtained by the alkoxylation of suitable starting molecules with an alkylene oxide, such as ethylene, propylene, butylene oxide, or a mixture thereof. Examples of initiator molecules include water, ammonia, aniline or polyhydric alcohols such as dihydric alcohols having a molecular weight of 62 to 399, especially the alkane polyols such as ethylene glycol, propylene glycol, hexamethylene diol, glycerol, trimethylol propane or trimethylol ethane, or the low molecular weight alcohols containing ether groups such as diethylene glycol, triethylene glycol, dipropylene glycol or tripropylene glycol. Other commonly used initiators include pentaerythritol, xylitol, arabitol, sorbitol, mannitol and the like. Particularly preferred is glycerin.

Preferably a poly(propylene oxide) polyol, including poly(oxypropylene-oxyethylene) polyols, is used. Preferably the oxyethylene content should comprise less than about 40 weight percent of the total and preferably less than about 25 weight percent of the total weight of the polyol. The ethylene oxide can be incorporated in any manner along the polymer chain, which stated another way means that the ethylene oxide can be incorporated either in internal blocks, as terminal blocks, may be randomly distributed along the polymer chain, or may be randomly distributed in a terminal oxyethylene-oxypropylene block. These polyols are conventional materials prepared by conventional methods.

Other polyether polyols include the poly(tetramethylene oxide) polyols, also known as poly(oxytetramethylene) glycol, that are commercially available as diols. These polyols are prepared from the cationic ring-opening of tetrahydrofuran and termination with water as described in Dreyfuss, P. and M. P. Dreyfuss, Adv. Chem. Series, 91, 335 (1969).

The high molecular weight polyol preferably has a molecular weight of from 1500 to 8000, more preferably from 2000 to 7000, yet more preferably from 2500 to 6000 and most preferably from 4000 to 5000 g/mol. The high molecular weight polyol preferably has a functionality of at least 1.5, more preferably from 2 to 6, yet more preferably from 2 to 4 and most preferably from 2 to 3. A particularly preferred polyol is a mixed propylene oxide-ethylene oxide polyol, with an ethylene oxide endcap. The polyol preferably has a hydroxyl number of from 20 to 90 and more preferably from 30 to 40. A particularly preferred high molecular weight polyether polyol is Voranol® CP 4711, which is available from The Dow Chemical Company. This polyol is formed using a glycerin starter and is a mixed ethylene oxide-propylene oxide polyol having a 14% ethylene oxide endcap. The polyol has a molecular weight of 4700, an OH value of 35 and a primary OH content of 70 to 75%.

The amount of high molecular weight polyol used is preferably from 5 to 95 weight percent, based on the total amount of polyol used. More preferably, from 10 to 90, yet more preferably from 15 to 85, even more preferably from 30 to 70 and most preferably from 40 to 60 weight percent of high molecular weight polyol is used.

Suitable polyester polyols which can be used instead of one or both of the polyether polyols include those produced from dicarboxylic acids, preferably aliphatic dicarboxylic acids, having 2 to 12 carbon atoms in the alkylene radical, and multifunctional alcohols, preferably diols. These acids include, for instance, aliphatic dicarboxylic acids such as glutaric acid, pimelic acid, suberic acid, azelaic acid, sebacic acid, undecanedioic acid, dodecanedioic acid, and preferably, succinic and adipic acids; cycloaliphatic dicarboxylic acids such as 1,3- and 1,4-cyclohexane dicarboxylic acid; and aromatic dicarboxylic acids such as phthalic acid and terephthalic acid. Examples of di- and multifunctional, particularly difunctional, alcohols are: ethylene glycol, diethylene glycol, propylene glycol, dipropylene glycol, 1,3-propanediol, 1,10-decanediol, glycerine, trimethylolpropane, and preferably, 1,4-butanediol, and 1,6-hexanediol. Other suitable polyester polyols would be known to the skilled person.

Other polyols can also be used in combination with the low and high molecular weight polyols. Such polyols are preferably used in an amount of less than 10 weight percent of the total polyol used. However, it is preferred that no other polyols are used.

Suitable polyisocyanates for use in the present invention include aliphatic, cycloaliphatic, araliphatic and preferably aromatic polyfunctional isocyanates.

Specific examples are: alkylene diisocyanates having from 4 to 12 carbon atoms in the alkylene radical, for example dodecane 1,12- diisocyanate, 2-ethyltetramethylene 1,4-diisocyanate, 2- methylpentamethylene 1,5-diisocyanate, tetramethylene 1,4-diisocyanate and preferably hexamethylene 1,6-diisocyanate; cycloaliphatic diisocyanates such as cyclohexane 1,3- and 1,4-diisocyanate and also any mixtures of these isomers, 1-isocyanato-3,3,5-trimethyl-5- isocyanatomethylcyclohexane (isophorone diisocyanate), hexahydrotolylene 2,4- and 2,6-diisocyanate and also the corresponding isomer mixtures, dicyclohexylmethane 4,4'-, 2,2'- and 2,4'-diisocyanate and also the corresponding isomer mixtures, and preferably aromatic diisocyanates and polyisocyanates, such as tolylene 2,4- and 2,6-diisocyanate and the corresponding isomer mixtures, diphenylmethane 4, 4'-, 2,4'- and 2,2'- diisocyanate and the corresponding isomer mixtures, mixtures of diphenylmethane 4,4'- and 2,4'-diisocyanates, polyphenylpolymethylene polyisocyanates, mixtures of diphenylmethane 4,4'-, 2,4'- and 2,2'- diisocyanates and polyphenylpolymethylene polyisocyanates (raw MDI) and mixtures of raw MDI and tolylene diisocyanates. The organic diisocyanates and polyisocyanates can be used individually or in the form of their mixtures.

Other suitable isocyanates are modified polyfunctional isocyanates, i.e. products which are obtained by chemical reaction of organic diisocyanates and/or polyisocyanates. Examples which may be mentioned are diisocyanates and/or polyisocyanates containing ester, urea, biuret, allophanate, carbodiimide, isocyanurate, uretdione and/or urethane groups. Specific examples are: organic, preferably aromatic polyisocyanates containing urethane groups and having NCO contents of from 33.6 to 15% by weight, preferably from 31 to 21% by weight, based on the total weight, for example diphenylmethane 4,4'-diisocyanate modified with low molecular weight diols, triols, dialkylene glycols, trialkylene glycols or polyoxyalkylene glycols having molecular weights up to 6000, in particular having molecular weights up to 1500, modified diphenylmethane 4,4'- and 2,4'-diisocyanate mixtures or modified raw MDI or tolylene 2,4- or 2,6-diisocyanate, with examples of dialkylene glycols or polyoxyalkylene glycols which can be used individually or as mixtures being: diethylene glycol, dipropylene glycol, polyoxyethylene, polyoxypropylene and polyoxypropylene-polyoxyethylene glycols, triols and/or tetrols. Also suitable are prepolymers containing NCO groups and having NCO contents of from 25 to 3.5% by weight, preferably from 21 to 14% by weight, based on the total weight, and prepared from the polyester and/or preferably polyether polyols described below and diphenylmethane 4, 4'-diisocyanate, mixtures of diphenylmethane 2,4'- and 4,4'-diisocyanate, tolylene 2,4- and/or 2,6-diisocyanates or raw MDI. Other modified polyisocyanates which have been found to be useful are liquid polyisocyanates containing carbodiimide groups and/or isocyanurate rings and having NCO contents of from 33.6 to 15% by weight, preferably from 31 to 21% by weight, based on the total weight, for example those on the basis of diphenylmethane 4,4'-, 2,4'- and/or 2,2'-diisocyanates and/or tolylene 2, 4- and/or 2,6-diisocyanate.

The modified polyisocyanates can, if desired, be mixed with one another or with unmodified organic polyisocyanates such as diphenylmethane 2,4'- and/or 4,41-diisocyanate, raw MDI, tolylene 2,4- and/or 2,6-diisocyanate.

Polyisocyanates which have been found to be particularly useful are diphenylmethane diisocyanate isomer mixtures or raw MDI having a diphenylmethane diisocyanate isomer content of from 33 to 55% by mass and polyisocyanate mixtures containing urethane groups and based on diphenylmethane diisocyanate having an NCO content of from 15 to 33% by mass.

A preferred isocyanate is ISONATE® M143, which is commercially available from The Dow Chemical Company. ISONATE® M143 has an NCO content of 29.5 weight percent, an equivalent weight of 1.43 and a functionality of 2.15.

When preparing a polyurethane polymer according to this invention, the polyisocyanate is used in an amount to provide for an isocyanate reaction index of advantageously from 80 to 130, preferably from 85 to 110, and more preferably from 90 to 105. By the term "isocyanate index" it is understood that at an index of 100, one equivalent of isocyanate is present for each isocyanate reactive hydrogen atom present from the polyol, or other active hydrogen atom bearing substance able to react with the polyisocyanate.

Additional optional components which are suitably included in the composition include additional filler, surface active agents, water absorbents, anti-foaming agents, viscosity cutters and colorants. These components are typically added to the polyol side of the reactants, prior to addition of the polyisocyanate.

Additional fillers can be any standard filler known to the skilled person, such as for example chalk or mica. Additional fillers, where present, are used in amounts of less that 10% and preferably less than 5% by weight, based on the total weight of the composition.

Suitable surface-active substances are, for example, compounds which serve to aid the homogenization of the starting materials and may also be suitable for regulating the cell structure of the plastics. Examples which may be mentioned are emulsifiers such as the sodium salts of castor oil sulphates or of fatty acids and also amine salts of fatty acids, e.g. diethylamine oleate, diethanolamine stearate, diethanolamine ricinoleate, salts of sulfonic acids, e.g. alkali metal or ammonium salts of dodecylbenzene- or dinaphthylmethanedisulfonic acid and ricinoleic acid; foam stabilizers such as siloxane-oxalkylene copolymers and other organopolysiloxanes, ethoxylated alkylphenols, ethoxylated fatty alcohols, paraffin oils, castor oil or ricinoleate esters, Turkey red oil and peanut oil and cell regulators such as paraffins, fatty alcohols and dimethylpolysiloxanes. The above-described oligomeric acrylates having polyoxyalkylene and fluoroalkane radicals as side groups are also suitable for improving the emulsifying action, the cell structure and/or stabilizing the foam. The surface-active substances are usually employed in amounts of from 0.01 to 5 parts by weight, based on 100 parts by weight of polyol.

Any suitable water absorbents known to the skilled person can be used. However, it is preferred that the water absorbent is a zeolite. The zeolite can be added in powder form or in paste form. A particularly preferred zeolite paste is Voratron EG 711, produced by the Dow Chemical Company.

Any suitable anti-foaming agents known to the skilled person can be used, including silicone and non-silicone containing anti-foaming agents. It is preferred that the anti-foaming agent is used in an amount of less than 2 percent by weight. One preferred commercially available anti-foaming agent is Antifoam 1500, which is produced by Dow Coming.

It is also preferred that the composition includes a viscosity cutter. In some cases, the anti-foaming agent acts as the viscosity cutter. However, where a separate viscosity cutter is used, it is typically used in an amount of less than 2 percent by weight. The skilled person would understand which suitable viscosity cutters could be used. Some commercially available viscosity cutters include those of BYK-Chemie, such as BYK®-W 985, BYK®-W 995 and BYK®-W 996.

Preferred embodiments of the invention will be described with reference to the drawings in which:-
Figure 1 is a bar chart showing the thermal conductivity of a series of polymers containing a filler;
Figure 2 is a chart showing the surface temperature of a series of bone moulds during moulding.

### Examples 1 to 10

A number of different compositions were made using a variety of different fillers, as well as a polyurethane-only composition. All of the compositions were made using the same basic polyurethane composition as shown in Table 1:

**Table 1**

| Component | Amount (by weight) |
|---|---|
| High molecular weight polyol (Voranol CP 4711) | 46.19 |
| Catalyst (Triethylene diamine 33 % in dipropylene glycol) | 0.05 |
| Zeolite paste (Voratron EG 711) | 7.39 |
| Low molecular weight polyol (Voranal CP 260) | 46.19 |

The isocyanate (Isonate 143M) was added to give an isocyanate index of between 90 and 95.

Filler, where added, was added to a mixture of the polyols, zeolite paste and catalyst, and was stirred thoroughly. The isocyanate and the polyol containing mixture are then mixed together.

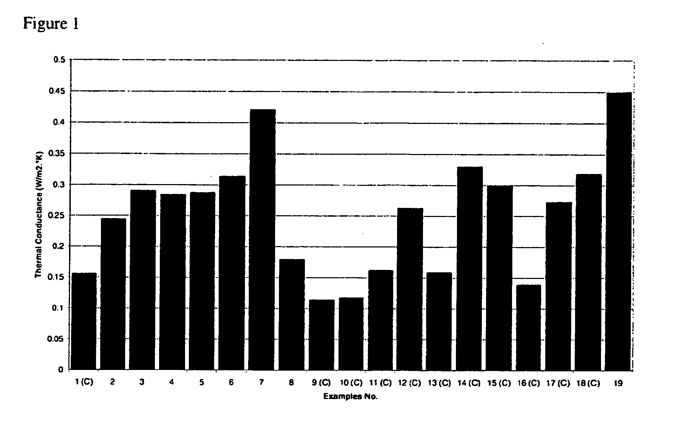

In Examples 1 to 20, the polyurethane mixture for each example was formed into a plate of dimension 20cm x 20cm by 1 cm and the thermal conductance of the plate was measured using a LASERCOMP FOX 200 using EN 12667. The thermal conductance was measured in the temperature range of 30 to 40°C. The weight percentage for each filler used, based on the total weight of the composition, and the resulting thermal conductance of the composition are given in Table 2. The thermal conductance results are shown in Figure 1.

**Table 2**

| EXAMPLE | FILLER | WT % FILLER | THERMAL CONDUCTANCE (W/m².°K) |
|---|---|---|---|
| 1 (C) | No Filler | - | 0.156 |
| 2 | 30 micrometers Al powder | 35% | 0.245 |
| 3 | 30 micrometers Al powder | 50% | 0.291 |
| 4 | 100 micrometers Al powder | 50% | 0.284 |
| 5 | 100 micrometers Al powder | 60% | 0.288 |
| 6 | 30 micrometers Al powder | 75% | 0.314 |
| 7 | 30 micrometers lamellar Al | 30% | 0.421 |
| 8 | 30 micrometers Cu powder | 35% | 0.179 |
| 9 (C) | 50 micrometers BaSO₄ powder | 35% | 0.114 |
| 10 (C) | 50 micrometers BaSO₄ powder | 50% | 0.118 |
| 11 (C) | 50 micrometers CaCO₃ powder | 35% | 0.162 |
| 12 (C) | 50 micrometers dolomite (CaMg(CO₃)₂) powder | 50% | 0.263 |
| 13 (C) | 50 micrometers FeS powder | 50% | 0.159 |
| 14 (C) | 50 micrometers silica (SiO₂) powder | 50% | 0.33 |
| 15 (C) | 25 micrometers pyrite (FeO2) powder | 50 % | 0.3 |
| 16 (C) | 175 micrometers pyrite (Fe02) powder | 50 % | 0.139 |
| 17 (C) | 3 micrometers pyrite (FeO2) powder | 50 % | 0.273 |
| 18 (C) | 50 micrometers alumina (Al₂O₃) powder | 50% | 0.319 |
| 19 | 30 micrometer Al powder and lamellar Al | 30% powder, 20% lamellar | 0.449 |

Examples marked (C) are comparative examples and are not part of the present invention. They relate to compositions made with the same polyurethane, but with no filler or non-metallic fillers.

It can be seen that the composition comprising the mixture of Al powder and lamellar Al has a particularly high thermal conductance, which is higher than the powder or lamellar A1 alone. The use of a mixture of particulate of different shapes appears to provide a synergistic effect. Accordingly, in a preferred embodiment, the metal particulate is formed of a mixture of substantial spherical particulate and lamellar particulate

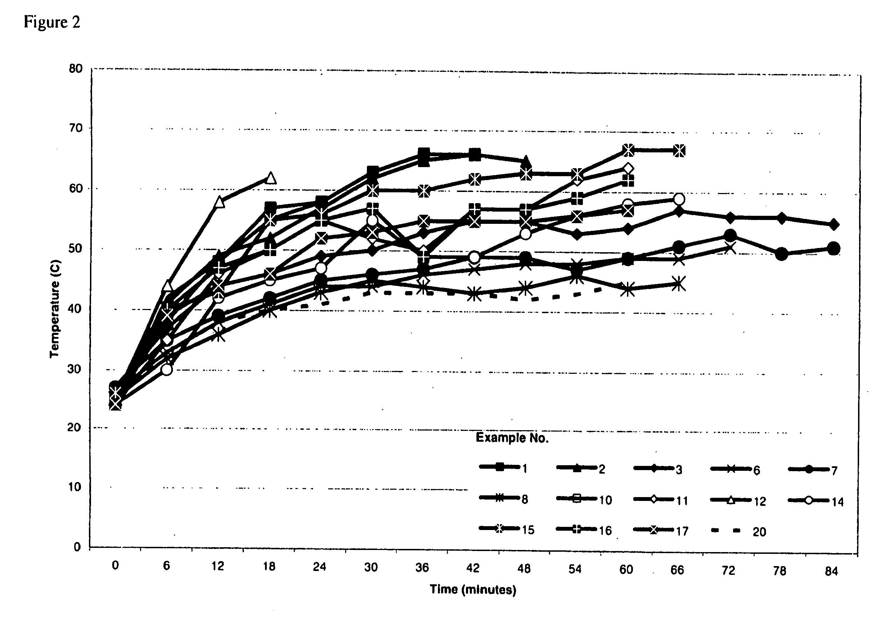

Polyurethane moulds were formed using the compositions in Table 2 for making so called "bone" moulds, which are moulds for forming flat sheets. The bone mould was formed to measure the temperature behaviour of the mould during pouring of a polyurethane formulation that is typically used for making shoe moulds. Figure 2 shows the temperature measurement of the surface of the moulds after pouring of the polyurethane into the mould.

The same compositions were also formed into blocks so that the physical properties could be measured, including the suitability of the materials for processing into moulds by turning, milling, holing and threading.

As well as the measurement of the thermal conductance of the composition, it is also important that the composition does not show significant thermal expansion. The thermal expansion was measured by measuring the change in the length of the part relative to the initial length of the part over a temperature range. The shrinkage is given per degree of temperature change. Other physical properties are also important, such as the density and the hardness. A mould should have a density of less than 1.8 g/cm³ and a hardness of greater than 70 when measured by Shore D, according to ASTM D2240.

In addition, the properties on machining are important. The composition must be sufficiently dimensionally stable such that it does not break or collapse on machining, that it has a good surface quality and that the composition does not form excessive dust on milling. The production of dust is not only dangerous for the workers, but also causes problems for cleaning of the apparatus after milling. By consideration of these features, it is possible to assess both qualitatively and quantitatively whether a particular formulation is suitable for use as a mould.

Table 3 below compares the results of these tests for a number of the Examples. As can be seen, the compositions of the present invention compare favourably with those which are not part of the present invention. In particular, the compositions which are not part of the invention typically demonstrate either poor thermal conductance or poor expansion, as well as often producing dust on milling.

**Table 3**

| | Physical property | | Thermal property | | Machining quality | | **Total** |
|---|---|---|---|---|---|---|---|
| Example | Density <1.8g/cm³ | Hardness >70 Shore D | Thermal expansion <70(10⁻⁶/°C) | Thermal Conductance >0.2 (W/m/K) | Absence of Dust | Finishing surface of sufficient quality | |
| 1 (C) | X | X | X | | X | X | **5** |
| 2 | X | X | X | X | X | | **5** |
| 3 | X | X | X | X | X | X | **6** |
| 4 | X | X | | X | X | X | **5** |
| 5 | X | X | X | X | X | | **5** |
| 6 | X | X | | X | X | X | **5** |
| 7 | X | X | | X | X | | **4** |
| 8 | X | X | | X | X | | **4** |
| 9 (C) | X | | X | | | X | **3** |
| 10 (C) | X | X | | X | | X | **4** |
| 11 (C) | X | X | | | | | **2** |
| 12 (C) | X | X | | X | | | **3** |
| 13 (C) | X | X | | X | | | **3** |
| 14 (C) | X | X | | | | | **2** |
| 15 (C) | X | X | | X | | | **3** |
| 16 (C) | X | X | | | | | **2** |

As can be seen from the results above, the composition of Example 3 is particularly suitable for use in the production of moulds. However, a number of the other compositions according to the present invention also produced good moulds.

Moulds with a particularly good surface were produced by using a vacuum when adding the filler to the polyol and also by inclusion of an anti-foaming agent. The benefit of a good mould surface is that the resultant article produced from the mould has similar excellent surface properties.

A filled polyurethane mould according to the present invention can be produced for significantly less cost than the corresponding mould made solely from aluminium.

## Claims

1. A composition comprising a polyurethane and from 20 to 80 weight percent of a particulate metal or metal alloy filler, wherein polyurethane is the reaction product of:
a) a first polyol, the first polyol having a molecular weight of less than 1000;
b) a second polyol, the second polyol having a molecular weight of from 1500 to 10000; and
c) at least one polyisocyanate, and
wherein the particulate metal or metal alloy filler has a thermal conductivity of at least 150 watts/m·°K.

2. A composition as claimed in claim having a density of at least 1.2 g/cm³.

3. A composition as claimed in claim 1 or claim 2, wherein the first and second polyols are polyether polyols.

4. A composition as claimed in any one of claims 1 to 3, wherein the metal or metal alloy is non-ferromagnetic.

5. A composition as claimed in claim 4, where in the metal or metal alloy is at least one of aluminium, copper, silver, gold, bronze and zinc.

6. A composition as claimed in any one of the preceding claims, wherein the metal or metal alloy filler is present in an amount of from 30 to 70 weight percent, based on the total weight of composition.

7. A composition as claimed in any one of the preceding claims, wherein the particulate is in the form of one or more of granules, platelets, pellets, beads, flakes, particles, lamellae and grains.

8. A composition as claimed in any one of the preceding claims, wherein the composition additionally comprises a water absorbent.

9. A composition as claimed in claim 8, wherein the water absorbent is a zeolite.

10. A composition as claimed in any one of the preceding claims, wherein the first polyether polyol has a molecular weight of 100 to 600 and a functionality of from 2 to 8.

11. A composition as claimed in any one of the preceding claims, wherein the second polyether polyol has a molecular weight of from 1500 to 8000 and a functionality of from 2 to 6.

12. A composition as claimed in any one of the preceding claims, wherein the isocyanate is an aromatic polyfunctional isocyanate.

13. A composition as claimed in any one of the preceding claims, wherein the composition additionally comprises an anti-foaming agent.

14. A composition as claimed in any one of the preceding claims, wherein the first polyol is present in an amount of from 5 to 95 weight percent and the second polyol is present in an amount of from 5 to 95 weight percent based on the total amount of polyol in the composition.

15. A composition comprising a polyurethane, a zeolite paste and a particulate metal or metal alloy filler, wherein the polyurethane is the reaction product of:
a) from 40 to 60 parts by weight of a first polyether polyol, the first polyether polyol having a molecular weight of from 100 to 600 and a functionality of from 2 to 8;
b) from 40 to 60 parts by weight of a second polyether polyol, the second polyether polyol having a molecular weight of from 1500 to 8000 and a functionality of from 2 to 6; and
c) at least one isocyanate, wherein the isocyanate is present in an amount to provide for an isocyanate index of from 80 to 115, and
wherein the composition comprises
from 5 to 15 parts by weight of the zeolite paste and from 50 to 200 parts by weight of a particulate aluminium filler.

16. A mould comprising the composition of any one of the preceding claims.

17. A mould as claimed in claim 16, wherein the mould is for forming a plastics material part.

18. A mould as claimed in claim 16 or claim 17, wherein the mould is for forming part of a footwear article.

19. A mould as claimed in claim 18, wherein the mould is for forming a sole for a footwear article.

20. A mould for producing a plastics material part comprising a polyurethane and a particulate metal or metal alloy filler, wherein the polyurethane is the reaction product of:
a) a first polyol, the first polyol having a molecular weight of less than 1000;
b) a second polyol, the second polyol having a molecular weight of from 1500 to 10000; and
c) at least one polyisocyanate.

21. A mould for a part of a footwear article formed from a composition comprising a polyurethane and at least one particular metal or metal alloy filler, wherein the polyurethane is the reaction product of at least one polyol and at least one isocyanate.

22. A mould as claimed in claim 21, wherein the part is a sole.

23. A method of producing a mould, comprising the steps of:
i) mixing a first polyol having a molecular weight of less than 1000 and a second polyol having a molecular weight of from 1500 to 10000;
ii) adding a particulate metal or metal alloy filler to the mixture of step i) wherein the metal has a thermal conductivity of at least 150 watts/m·°K;
iii) mixing the polyol and filler mixture under vacuum; and
iv) adding at least one isocyanate and mixing.

24. A method as claimed in claim 23, wherein a water absorbent is additionally added in step i).

25. A method as claimed in claim 23 or claim 24, wherein the metal or metal alloy is at least one of aluminium, copper, silver, gold, bronze and zinc

26. A method of producing a plastics material part, comprising producing the mould of any one of claims 16 to 22 or undertaking the method of any one of claims 23 to 25, and using the mould to produce a part.

## Patentansprüche

1. Zusammensetzung, die ein Polyurethan und von 20 bis 80 Gew.-% eines partikulären Füllstoffs aus Metall oder Metalllegierung umfasst, wobei Polyurethan das Reaktionsprodukt von:
a) einem ersten Polyol, wobei das erste Polyol ein Molekulargewicht kleiner als 1000 hat;
b) einem zweiten Polyol, wobei das zweite Polyol ein Molekulargewicht von 1500 bis 10.000 hat; und
c) mindestens einem Polyisocyanat ist, und
wobei der partikuläre Füllstoff aus Metall oder Metalllegierung eine Wärmeleitfähigkeit von mindestens 150 Watt/m·°K hat.

2. Zusammensetzung nach Anspruch 1 mit einer Dichte von mindestens 1,2 g/cm³.

3. Zusammensetzung nach Anspruch 1 oder Anspruch 2, wobei das erste und das zweite Polyol Polyetherpolyole sind.

4. Zusammensetzung nach einem der Ansprüche 1 bis 3, wobei das Metall oder die Metalllegierung nicht-ferromagnetisch ist.

5. Zusammensetzung nach Anspruch 4, wobei das Metall oder die Metalllegierung mindestens eines von Aluminium, Kupfer, Silber, Gold, Bronze und Zink ist.

6. Zusammensetzung nach einem der vorhergehenden Ansprüche, wobei der Füllstoff aus Metall oder Metalllegierung in einer Menge von 30 bis 70 Gew.-% vorliegt, bezogen auf das Gesamtgewicht der Zusammensetzung.

7. Zusammensetzung nach einem der vorhergehenden Ansprüche, wobei der partikuläre Füllstoff in Form von einem oder mehreren von Kügelchen, Plättchen, Pellets, Perlen, Flocken, Partikeln, Lamellen und Körnchen vorliegt.

8. Zusammensetzung nach einem der vorhergehenden Ansprüche, wobei die Zusammensetzung zusätzlich einen wasserabsorbierenden Stoff umfasst.

9. Zusammensetzung nach Anspruch 8, wobei der wasserabsorbierende Stoff ein Zeolith ist.

10. Zusammensetzung nach einem der vorhergehenden Ansprüche, wobei das erste Polyetherpolyol ein Molekulargewicht von 100 bis 600 und eine Funktionalität von 2 bis 8 hat.

11. Zusammensetzung nach einem der vorhergehenden Ansprüche, wobei das zweite Polyetherpolyol ein Molekulargewicht von 1500 bis 8000 und eine Funktionalität von 2 bis 6 hat.

12. Zusammensetzung nach einem der vorhergehenden Ansprüche, wobei das Isocyanat ein aromatisches polyfunktionelles Isocyanat ist.

13. Zusammensetzung nach einem der vorhergehenden Ansprüche, wobei die Zusammensetzung zusätzlich ein Antischaummittel umfasst.

14. Zusammensetzung nach einem der vorhergehenden Ansprüche, wobei das erste Polyol in einer Menge von 5 bis 95 Gew.-% vorliegt und das zweite Polyol in einer Menge von 5 bis 95 Gew.-% vorliegt, bezogen auf die Gesamtmenge an Polyol in der Zusammensetzung.

15. Zusammensetzung, die ein Polyurethan, eine Zeolithpaste und einen partikulären Füllstoff aus Metall oder Metalllegierung umfasst, wobei das Polyurethan das Reaktionsprodukt von:
a) 40 bis 60 Gewichtsteilen eines ersten Polyetherpolyols, wobei das erste Polyetherpolyol ein Molekulargewicht von 100 bis 600 und eine Funktionalität von 2 bis 8 hat;
b) 40 bis 60 Gewichtsteilen eines zweiten Polyetherpolyols, wobei das zweite Polyetherpolyol ein Molekulargewicht von 1500 bis 8000 und eine Funktionalität von 2 bis 6 hat; und
c) mindestens einem Isocyanat ist, wobei das Isocyanat in einer Menge vorliegt, die einen Isocyanatindex von 80 bis 115 ergibt, und
wobei die Zusammensetzung Folgendes umfasst: 5 bis 15 Gewichtsteile der Zeolithpaste und 50 bis 200 Gewichtsteile eines partikulären Aluminiumfüllstoffs.

16. Form, welche die Zusammensetzung nach einem der vorhergehenden Ansprüche umfasst.

17. Form nach Anspruch 16, wobei die Form zum Formen eines Kunststoffteils dient.

18. Form nach Anspruch 16 oder Anspruch 17, wobei die Form zum Formen eines Fußbekleidungsartikels dient.

19. Form nach Anspruch 18, wobei die Form zum Formen einer Sohle für einen Fußbekleidungsartikel dient.

20. Form zur Herstellung eines Kunststoffteils aus einem Polyurethan und einem partikulären Füllstoff aus Metall oder Metalllegierung, wobei das Polyurethan das Reaktionsprodukt von:
a) einem ersten Polyol, wobei das erste Polyol ein Molekulargewicht kleiner als 1000 hat;
b) einem zweiten Polyol, wobei das zweite Polyol ein Molekulargewicht von 1500 bis 10.000 hat; und
c) mindestens einem Polyisocyanat ist.

21. Form für einen Teil eines Fußbekleidungsartikels aus einer Zusammensetzung, die ein Polyurethan und mindestens einen partikulären Füllstoff aus Metall oder Metalllegierung umfasst, wobei das Polyurethan das Reaktionsprodukt von mindestens einem Polyol und mindestens einem Isocyanat ist.

22. Form nach Anspruch 21, wobei der Teil eine Sohle ist.

23. Verfahren zur Herstellung einer Form, mit den folgenden Schritten:
i) Mischen eines ersten Polyols mit einem Molekulargewicht kleiner als 1000 und eines zweiten Polyols mit einem Molekulargewicht von 1500 bis 10.000;
ii) Zugabe eines partikulären Füllstoffs aus Metall oder Metalllegierung zu der Mischung von Schritt i), wobei das Metall eine Wärmeleitfähigkeit von mindestens 150 Watt/m·°K hat;
iii) Mischen der Mischung aus Polyol und Füllstoff unter Vakuum; und
iv) Zugabe von mindestens einem Isocyanat und dann Mischen.

24. Verfahren nach Anspruch 23, wobei in Schritt i) zusätzlich ein wasserabsorbierender Stoff zugegeben wird.

25. Verfahren nach Anspruch 23 oder Anspruch 24, wobei das Metall oder die Metalllegierung mindestens eines von Aluminium, Kupfer, Silber, Gold, Bronze und Zink ist.

26. Verfahren zur Herstellung eines Kunststoffteils, bei dem die Form nach einem der Ansprüche 16 bis 22 hergestellt wird oder das Verfahren nach einem der Ansprüche 23 bis 25 durchgeführt wird und bei dem die Form zur Herstellung eines Teils verwendet wird.

## Revendications

1. Composition comprenant un polyuréthane et de 20 à 80 % en poids d'une charge constituée de particules de métal ou d'alliage métallique, dans laquelle le polyuréthane est le produit de réaction :
a) d'un premier polyol, lequel premier polyol présente une masse molaire inférieure à 1000 ;
b) d'un deuxième polyol, lequel deuxième polyol présente une masse molaire valant de 1500 à 10000 ;
c) et d'au moins un polyisocyanate ;
et dans laquelle la charge constituée de particules de métal ou d'alliage métallique présente une conductivité thermique qui vaut au moins 15 0 W/m.°K.

2. Composition conforme à la revendication 1, qui présente une masse volumique d'au moins 1,2 g/cm³.

3. Composition conforme à la revendication 1 ou 2, pour laquelle les premier et deuxième polyols sont des polyéther-polyols.

4. Composition conforme à l'une des revendications 1 à 3, dans laquelle le métal ou l'alliage métallique est non-ferromagnétique.

5. Composition conforme à la revendication 4, dans laquelle le métal ou l'alliage métallique est au moins l'un des suivants : aluminium, cuivre, argent, or, bronze et zinc.

6. Composition conforme à l'une des revendications précédentes, dans laquelle la charge de métal ou d'alliage métallique se trouve en une quantité représentant de 30 à 70 % du poids total de la composition.

7. Composition conforme à l'une des revendications précédentes, dans laquelle les particules se trouvent sous l'un ou plusieurs des aspects suivants : granules, plaquettes, pastilles, perles, paillettes, particules, lamelles et grains.

8. Composition conforme à l'une des revendications précédentes, laquelle composition comprend en outre un agent hydro-absorbant.

9. Composition conforme à la revendication 8, dans laquelle l'agent hydro-absorbant est une zéolithe.

10. Composition conforme à l'une des revendications précédentes, pour laquelle le premier polyol est un polyéther-polyol qui présente une masse molaire de 100 à 600 et comporte de 2 à 8 groupes fonctionnels.

11. Composition conforme à l'une des revendications précédentes, pour laquelle le deuxième polyol est un polyéther-polyol qui présente une masse molaire de 1500 à 8000 et comporte de 2 à 6 groupes fonctionnels.

12. Composition conforme à l'une des revendications précédentes, pour laquelle l'isocyanate est un isocyanate aromatique polyfonctionnel.

13. Composition conforme à l'une des revendications précédentes, laquelle composition comporte en outre un agent anti-moussage.

14. Composition conforme à l'une des revendications précédentes, pour laquelle le premier polyol se trouve en une quantité représentant de 5 à 95 % du poids total de polyols dans la composition et le deuxième polyol se trouve en une quantité représentant de 5 à 95 % du poids total de polyols dans la composition.

15. Composition comprenant un polyuréthane, une pâte de zéolithe et une charge constituée de particules de métal ou d'alliage métallique, dans laquelle le polyuréthane est le produit de réaction :
a) de 40 à 60 parties en poids d'un premier polyéther-polyol, lequel premier polyéther-polyol présente une masse molaire de 100 à 600 et comporte de 2 à 8 groupes fonctionnels ;
b) de 40 à 60 parties en poids d'un deuxième polyéther-polyol, lequel deuxième polyéther-polyol présente une masse molaire de 1500 à 8000 et comporte de 2 à 6 groupes fonctionnels ;
c) et d'au moins un isocyanate, lequel isocyanate se trouve en une quantité appropriée pour que l'indice d'isocyanate vaille de 80 à 115 ;
et laquelle composition comprend de 5 à 15 parties en poids de pâte de zéolithe et de 50 à 200 parties en poids d'une charge constituée de particules d'aluminium.

16. Moule comprenant une composition conforme à l'une des revendications précédentes.

17. Moule conforme à la revendication 16, lequel moule est conçu pour le façonnage de pièces en matière plastique.

18. Moule conforme à la revendication 16 ou 17, lequel moule est conçu pour le façonnage de pièces d'articles de type chaussure.

19. Moule conforme à la revendication 18, lequel moule est conçu pour le façonnage de semelles d'articles de type chaussure.

20. Moule de production de pièces en matière plastique, comprenant un polyuréthane et une charge constituée de particules de métal ou d'alliage métallique, dans lequel le polyuréthane est le produit de réaction :
a) d'un premier polyol, lequel premier polyol présente une masse molaire inférieure à 1000 ;
b) d'un deuxième polyol, lequel deuxième polyol présente une masse molaire valant de 1500 à 10000 ;
c) et d'au moins un polyisocyanate.

21. Moule pour pièce d'article de type chaussure, formé d'une composition comprenant un polyuréthane et au moins une charge constituée de particules de métal ou d'alliage métallique, dans lequel le polyuréthane est le produit de réaction d'au moins un polyol et d'au moins un polyisocyanate.

22. Moule conforme à la revendication 21, la pièce étant une semelle.

23. Procédé de fabrication d'un moule, qui comporte les étapes suivantes :
i) mélanger un premier polyol présentant une masse molaire inférieure à 1000 et un deuxième polyol présentant une masse molaire de 1500 à 10000 ;
ii) ajouter au mélange issu de l'étape (i) une charge constituée de particules de métal ou d'alliage métallique, lequel métal présente une conductivité thermique qui vaut au moins 150 W/m.°K;
iii) brasser sous vide le mélange de polyols et de charge ;
iv) et y ajouter au moins un isocyanate et brasser le tout.

24. Procédé conforme à la revendication 23, dans lequel on ajoute en plus, au cours de l'étape (i), un agent hydro-absorbant.

25. Procédé conforme à la revendication 23 ou 24, dans lequel le métal ou l'alliage métallique est au moins l'un des suivants : aluminium, cuivre, argent, or, bronze et zinc.

26. Procédé de production de pièces en matière plastique, comprenant le fait de fabriquer un moule conforme à l'une des revendications 16 à 22 ou de mettre en oeuvre un procédé conforme à l'une des revendications 23 à 25, et le fait d'utiliser ce moule pour produire une pièce.
